# EUROPEAN PATENT APPLICATION

(11) **EP 4 790 424 A1**
(43) Date of publication of application: **12.08.2026**
(21) Application number: 24874389.0
(22) Date of filing: 27.08.2024
(51) Int. Cl.: G01N 35/02, B65G 54/02, G01N 35/04

(54) **SPECIMEN TRANSPORT DEVICE AND SPECIMEN TRANSPORT METHOD**

(30) Priority: 06.10.2023 JP 2023174616
(71) Applicant: Hitachi High-Tech Corporation, Minato-ku Tokyo 105-6409 (JP)
(72) Inventor: SHISHIDO Daigo, Tokyo 105-6409 (JP); FUNATSU Terunobu, Tokyo 105-6409 (JP); YASUI Akihiro, Tokyo 105-6409 (JP); MATSUKA Takeshi, Tokyo 105-6409 (JP)
(74) Representative: MERH-IP Matias Erny Reichl Hoffmann Patentanwälte PartG mbB
(86) International application number: PCT/JP2024/030383
(87) International publication number: WO 2025/074775

(57) **Abstract**

A plurality of position sensors 210 that detect a position of a holder 202 holding a sample container 201, and a calculating unit 209 are provided, the plurality of position sensors 210 are disposed such that the position sensors 210 detect the holder 202 at a predetermined position, and the calculating unit 209 determines the position of the holder 202 based on a detection result of the plurality of position sensors 210. Accordingly, it is possible to provide a sample transporting device and a sample transporting method that can more stably transport a sample by implementing stable holder position detection as compared to the related art.

## Description

### Technical Field

The present invention relates to a sample transporting device and a sample transporting method suitable for a sample preprocessing system and an automatic analysis system.

### Background Art

As an example of a research laboratory specimen delivery system and a corresponding operation method that are highly flexible and provide high transport performance, PTL 1 discloses that the system includes: several container carriers each of which includes at least one magnetically active device, preferably at least one permanent magnet, and is adapted to convey a specimen container; a transport surface adapted to convey each container carrier; and several electromagnetic actuators that are disposed to be stationary below the transport surface and are adapted to move the container carriers on the transport surface by applying a magnetic force to the container carriers.

As an example of an assay laboratory specimen distribution system that can recognize a position on a transfer surface, PTL 2 discloses that the system includes the transfer surface; a plurality of specimen container carriers; a driving unit configured to move each specimen container carrier on the transfer surface; and a control device configured to control movement of the specimen container carriers on the transfer surface by driving the driving unit such that each specimen container carrier moves along a corresponding transfer path, a plurality of optically recognizable geometric shapes are placed on the transfer surface, and each geometric shape represents a dedicated field on the transfer surface.

### Citation List

### Patent Literature

PTL 1: JP2017-77971A
PTL 2: JP2018-119962A

### Summary of Invention

### Technical Problem

As sample processing systems for automatically analyzing a sample that is a biological sample such as blood or urine, there are a sample preprocessing system that performs loading, centrifugation, aliquoting, labeling, and the like of the sample, and an automatic analysis system that analyzes the sample processed by the sample preprocessing system.

The sample preprocessing system and the automatic analysis system include a sample transport line of a type using a belt conveyor or the like in order to transport the sample to a mechanism for performing predetermined processing or analysis. A plurality of such transport lines are mounted on a sample transporting device to transport the sample to the predetermined mechanism.

Meanwhile, PTL 1 discloses the research laboratory specimen delivery system that is highly flexible and provides high transport performance. In addition, as an example of a method for transporting a sample, PTL 2 discloses that a position sensor that detects a sample position (specifically, a permanent magnet position set at the sample) is provided, and the sample is transported by exciting an electromagnetic actuator corresponding to a direction in which the sample is desired to be transported according to position information detected by the position sensor.

PTL 2 provides a sample transporting device using the position sensor for detecting the position information of the sample. However, only a method of detecting a holder based on a single piece of sensor information is disclosed, and a method of detecting a holder at a predetermined position based on a plurality of pieces of sensor information is not considered.

In such a method of detecting the holder based on the single piece of sensor information, when the sensor deteriorates or malfunctions, holder position detection at a corresponding location fails and it is difficult to transport the holder, and thus there is room for improvement.

The invention provides a sample transporting device and a sample transporting method that can more stably transport a sample by implementing stable holder position detection as compared to the related art.

### Solution to Problem

The invention includes a plurality of aspects for solving the problems described above, and an example thereof includes: a plurality of sensors configured to detect a position of a sample holder that holds a sample container; and a control unit, in which the plurality of sensors are configured to detect the sample holder at a predetermined position, and the control unit determines the position of the sample holder based on a detection result of the plurality of sensors.

### Advantageous Effects of Invention

According to the invention, it is possible to more stably transport a sample by implementing stable holder position detection as compared to the related art. Problems, configurations, and effects other than those described above will be clarified by the following description of embodiments.

### Brief Description of Drawings

[FIG. 1] Fig. 1 is a schematic configuration view of a sample transporting device having a transporting device according to a first embodiment.
[FIG. 2] Fig. 2 is a schematic configuration view of the transporting device according to the first embodiment.
[FIG. 3] Fig. 3 is a partial top plan view of the transporting device according to the first embodiment.
[FIG. 4] Fig. 4 is a flow chart showing an example of a reset operation procedure according to the first embodiment.
[FIG. 5] Fig. 5 is a flow chart showing an example of a holder operation procedure according to the first embodiment.
[FIG. 5A] Fig. 5A is a view showing the state of the transporting device in one process of the flow chart of Fig. 5.
[FIG. 5B] Fig. 5B is a view showing the state of the transporting device in one process of the flow chart of Fig. 5.
[FIG. 5C] Fig. 5C is a view showing the state of the transporting device in one process of the flow chart of Fig. 5.
[FIG. 5D] Fig. 5D is a view showing the state of the transporting device in one process of the flow chart of Fig. 5.
[FIG. 5E] Fig. 5E is a view showing the state of the transporting device in one process of the flow chart of Fig. 5.
[FIG. 5F] Fig. 5F is a view showing the state of the transporting device in one process of the flow chart of Fig. 5.
[FIG. 6] Fig. 6 is a schematic view showing an outline of a transporting device and a change of a reflected light amount according to a second embodiment.
[FIG. 7] Fig. 7 is a partial top plan view of the transporting device according to the second embodiment.
[FIG. 8] Fig. 8 is a schematic view showing an outline of another form of the transporting device and the change of the reflected light amount according to the second embodiment.
[FIG. 9] Fig. 9 is a partial top plan view of another form of the transporting device according to the second embodiment.
[FIG. 10] Fig. 10 is a schematic view showing an outline of a transporting device and a change of a reflected light amount according to a third embodiment.
[FIG. 11] Fig. 11 is a partial top plan view of a transporting device according to a fourth embodiment.
[FIG. 12] Fig. 12 is a flow chart showing an example of a holder operation procedure according to the fourth embodiment.
[FIG. 12A] Fig. 12A is a view showing a state of the transporting device in one process of the flow chart of Fig. 12.
[FIG. 12B] Fig. 12B is a view showing the state of the transporting device in one process of the flow chart of Fig. 12.
[FIG. 12C] Fig. 12C is a view showing the state of the transporting device in one process of the flow chart of Fig. 12.
[FIG. 12D] Fig. 12D is a view showing the state of the transporting device in one process of the flow chart of Fig. 12.
[FIG. 12E] Fig. 12E is a view showing the state of the transporting device in one process of the flow chart of Fig. 12.
[FIG. 12F] Fig. 12F is a view showing the state of the transporting device in one process of the flow chart of Fig. 12.
[FIG. 12G] Fig. 12G is a view showing the state of the transporting device in one process of the flow chart of Fig. 12.

### Description of Embodiments

Hereinafter, embodiments of a sample transporting device and a sample transporting method of the invention will be described with reference to the drawings.

In the drawings used in the present description, the same or corresponding components are denoted by the same or similar reference signs, and repeated descriptions of these components may be omitted.

In the following embodiments, it is needless to mention that components (also including element steps and the like) thereof are not necessarily essential unless otherwise specified or unless clearly considered to be essential in principle.

### <First Embodiment>

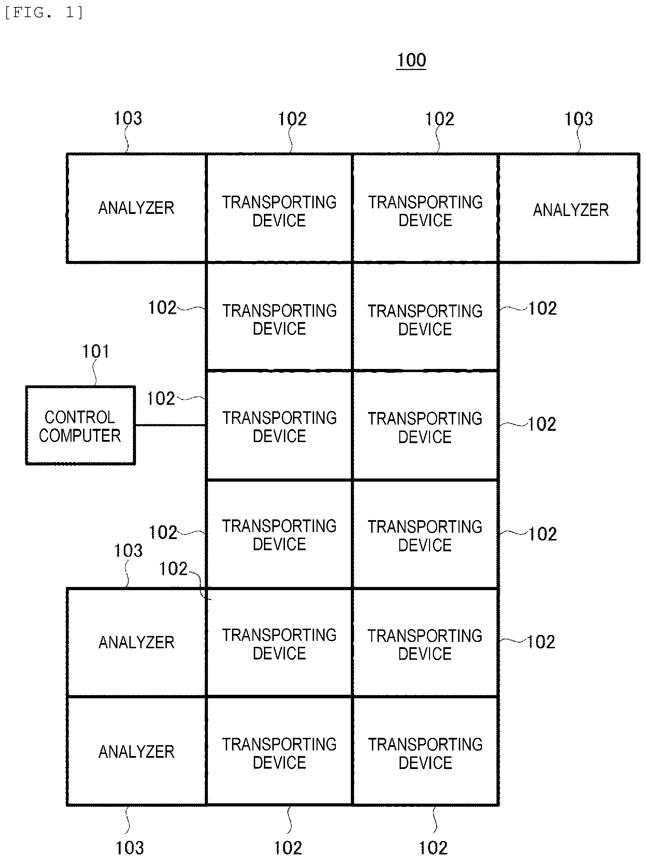

A sample transporting device and a sample transporting method according to a first embodiment of the invention will be described with reference to Figs. 1 to 5F.

First, an overall configuration of an entire sample analysis system including a transporting device will be described with reference to Fig. 1. Fig. 1 is a plan view showing the overall configuration of the sample analysis system including the transporting device according to the present embodiment.

A sample analysis system 100 according to the first embodiment shown in Fig. 1 is a system including an analyzer for automatically analyzing components in a sample such as blood or urine.

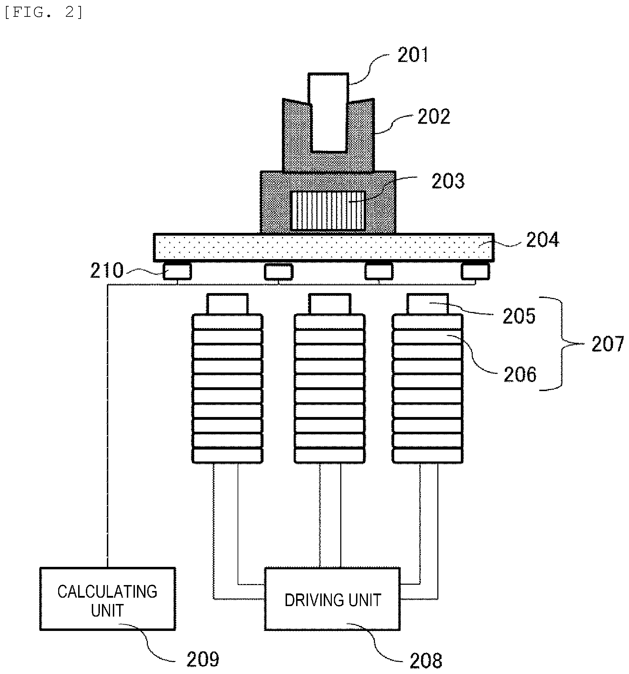

Main components of the sample analysis system 100 include a plurality of transporting devices 102 (twelve in Fig. 1) each of which transports, to a predetermined destination, a holder 202 (see Fig. 2) where a sample container 201 (see Fig. 2) containing the sample such as blood or urine is mounted or an empty holder 202 where the sample container 201 is not mounted, a plurality of analyzers 103 (four in Fig. 1), and a control computer 101 that integrally manages the sample analysis system 100.

Each analyzer 103 is a unit for performing qualitative and quantitative analysis on the components in the sample transported by the transporting device 102. Analysis items in this unit are not particularly limited, and a configuration of a known automatic analyzer for analyzing biochemical items and immunological items can be adopted. Further, when a plurality of such units are provided, specifications may be the same or different from each other, and are not particularly limited.

Each transporting device 102 is a device that transports the sample mounted on the holder 202 to the destination by sliding on a transport path due to an interaction between a magnetic body 203 (see Fig. 2) provided at the holder 202 and a magnetic pole 207 (see Fig. 2). Details thereof will be described with reference to Fig. 2 and subsequent drawings.

The control computer 101 controls an operation of the entire system including the transporting device 102 and the analyzer 103, and is implemented by a computer including a display device such as a liquid crystal display, an input device, a storage device, a CPU, a memory, and the like. An operation of each device is controlled by the control computer 101 based on various programs recorded in the storage device.

Operation control processing executed by the control computer 101 may be integrated into one program, may be divided into a plurality of programs, or may be a combination thereof. A part or all of the programs may be implemented by dedicated hardware or may be modularized.

Fig. 1 shows a case where four analyzers 103 are provided, and the number of analyzers is not particularly limited and may be one or more. Similarly, the number of transporting devices 102 is not particularly limited and may be one or more.

The sample analysis system 100 may be provided with various types of sample preprocessing and postprocessing units that execute preprocessing and postprocessing on the sample. Detailed configurations of the sample preprocessing and postprocessing units are not particularly limited, and a configuration of a known preprocessing device may be adopted.

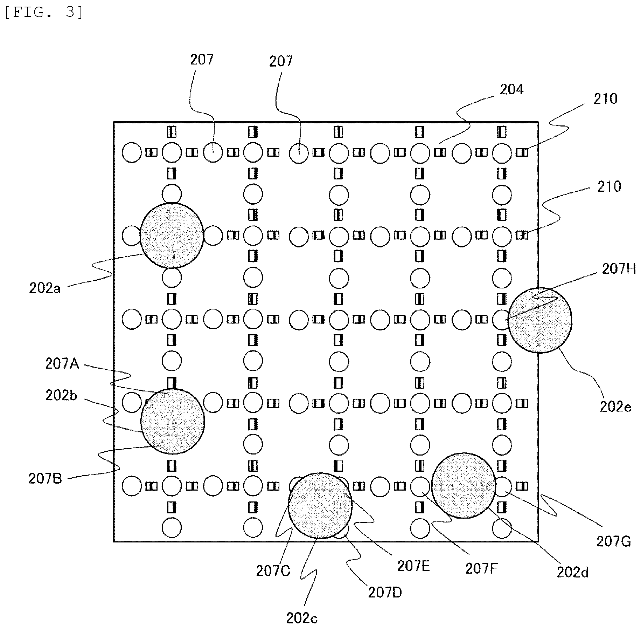

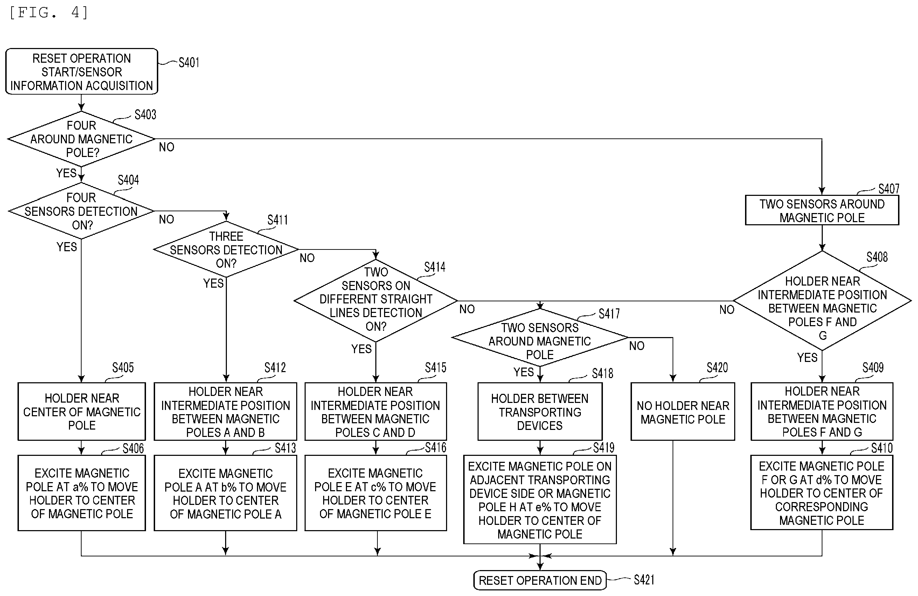

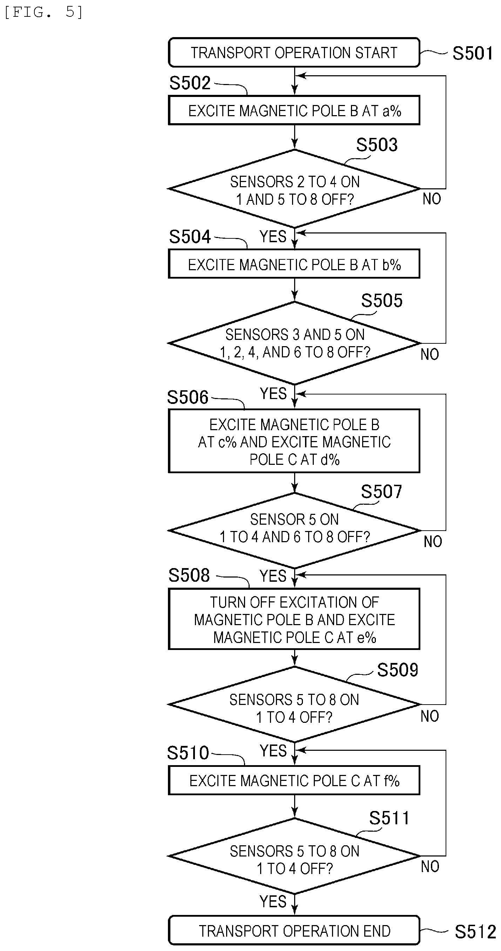

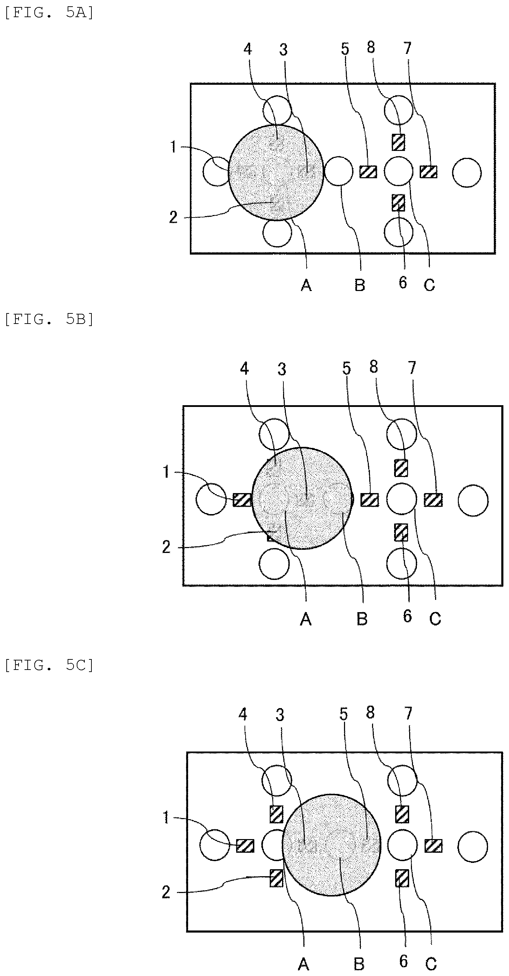

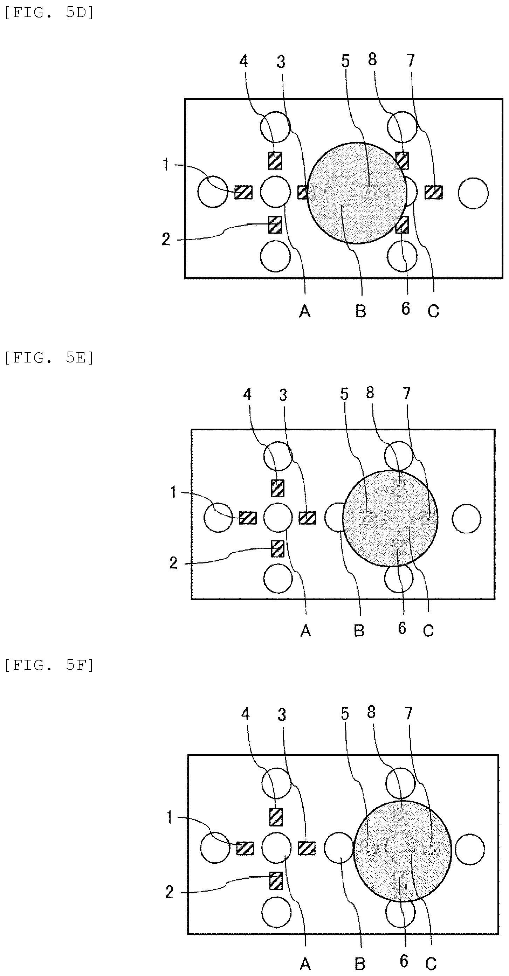

Next, a specific configuration of the transporting device 102 of the embodiment will be described with reference to Figs. 2 to 5F. Fig. 2 is a configuration view schematically showing the transporting device 102. Fig. 3 is a view showing a state of a part of an upper surface of the transporting device. Fig. 4 is a flow chart showing a reset operation method before holder transport is started in the embodiment. Fig. 5 is a flow chart showing a holder transporting method using a plurality of pieces of position sensor information in the embodiment, and Figs. 5A to 5F are views showing a state of the transporting device 102 in one process in the flow chart of Fig. 5.

In Fig. 2, a plurality of holders 202 where the sample container 201 containing the sample is provided are provided in the transporting device 102. The magnetic body 203 is provided at a bottom surface portion of each of the plurality of holders 202.

The magnetic body 203 is formed of, for example, a permanent magnet such as neodymium or ferrite, and alternatively, may be formed of another magnet and a soft magnetic body or may be formed of an appropriate combination thereof.

Although the magnetic body 203 is not required to be provided at a lower surface of the holder 202, the magnetic body 203 is preferably provided at the lower surface from the viewpoint of efficiently applying a transport force of an electromagnetic actuator.

The holder 202 including the magnetic body 203 moves to slide on a transporting surface 204. In order to generate the transport force, a plurality of magnetic poles 207 each implemented by a cylindrical core 205 and a winding 206 wound around an outer periphery of the core 205 are provided below the transporting surface 204.

In the transporting device 102 of the embodiment, the plurality of magnetic poles 207 provided therein are devices that generate thrust for transporting the holder 202, and are responsible for transporting the magnetic body 203, that is, transporting the sample.

In the embodiment, specifications of the magnetic poles 207 in the transporting device 102 are the same for all the magnetic poles 207, but are not required to be the same.

A driving unit 208 for applying a predetermined voltage to each magnetic pole 207 to cause a predetermined current to flow through the winding 206 is connected to the magnetic pole 207. The magnetic pole 207 to which the voltage is applied by the driving unit 208 functions as an electromagnet and attracts the magnetic body 203 of the holder 202 on the transporting surface 204. After the holder 202 is attracted by the magnetic pole 207, the application of the voltage to the magnetic pole 207 from the driving unit 208 is stopped, and the voltage is applied by the driving unit 208 to a different magnetic pole 207 adjacent to the magnetic pole 207 in the same manner as described above, thereby attracting the magnetic body 203 of the holder 202 to the adjacent magnetic pole 207.

By repeating this procedure, the sample contained in the sample container 201 held by the holder 202 provided with the magnetic body 203 is transported to the destination.

A calculating unit 209 determines a position of the holder 202 based on a detection result of a plurality of position sensors 210 based on a command from the control computer 101.

Position detection processing may be executed by the calculating unit 209 independently of the control computer 101 or may be executed by the control computer 101, and in the embodiment, various settings at the time of position detection are determined in the control computer 101 and the processing is executed by the calculating unit 209.

The calculating unit 209 calculates a current flowing through each winding 206 using various types of information such as position information, speed information, and weight information of the holder 202, and outputs a command signal to each driving unit 208. The driving unit 208 applies a voltage to the corresponding winding 206 based on the command signal.

A plurality of position sensors 210 that detect the position of the holder 202 holding the sample container 201 are provided between the transporting surface 204 and the magnetic pole 207. In the embodiment, each position sensor 210 is disposed such that the plurality of position sensors 210 detect the holder 202 at a predetermined position, and thus a disposition interval between the plurality of position sensors 210 is shorter than a length of the bottom surface of the holder 202.

Each position sensor 210 is preferably a reflection-side optical sensor or the like that emits light to the transporting surface 204 side immediately thereabove and detects light reflected by the bottom surface of the holder 202, and alternatively, the position sensors 210 may be implemented by other sensors and may be an appropriate combination thereof.

In Fig. 3, the position sensor 210 is provided at an intermediate position between the adjacent magnetic poles 207 in longitudinal and lateral traveling directions of the holder 202 as viewed with the magnetic pole 207 as a center. There are locations where two position sensors 210 are provided and locations where four position sensors 210 are provided around the magnetic pole 207, and alternatively, four position sensors 210 may be uniformly provided around all of the magnetic poles, or may be provided at any locations for purposes other than detecting the position of the holder 202.

Here, in Fig. 3, a holder located near a position immediately above a center of the magnetic pole 207 is referred to as a holder 202a, a holder located near an intermediate position between a magnetic pole A and a magnetic pole B is referred to as a holder 202b, a holder located near an intermediate position between a magnetic pole C and a magnetic pole D is referred to as a holder 202c, a holder located near an intermediate position between a magnetic pole F and a magnetic pole G is referred to as a holder 202d, and a holder located between the transporting devices 102 is referred to as a holder 202e.

Next, an example of a method for detecting where the holder 202 is located on the transporting device 102 during a reset operation before a transport operation is started will be described with reference to Figs. 3 and 4.

The flow chart of Fig. 4 shows a flow for the magnetic pole 207 at one specific location in the transporting device 102. In the actual reset operation, this flow is performed for all the magnetic poles 207 of all the transporting devices 102 in the system.

First, the reset operation is started according to an instruction from the control computer 101, and detection information from the position sensor 210 is acquired (S401).

Next, with reference to design information (magnetic pole 207 table) in the control computer 101 in advance, it is determined whether four position sensors 210 are disposed around the magnetic pole 207 in the transporting device 102 currently being targeted (S403). When it is determined that four position sensors 210 are disposed, the processing proceeds to step S404, and when it is determined that four position sensors 210 are not disposed, the processing proceeds to step S407.

When it is determined in step S403 that four position sensors 210 are disposed, it is determined whether the four position sensors 210 are in a detection ON state (S404). When it is determined that the four position sensors 210 are in the detection ON state, the processing proceeds to step S405, and the control computer 101 determines that the holder 202 is near the center of the magnetic pole 207 (that is, in a state like the holder 202a) (S405), and excites the magnetic pole 207 at a% to attract the holder 202 to the center of the magnetic pole 207 (S406). When the holder 202 is disposed at the center of the magnetic pole 207, the reset operation ends (S421).

On the other hand, when it is determined in step S403 that four position sensors 210 are not disposed, it is assumed that two position sensors 210 are disposed on the same straight line around the magnetic pole 207 (S407), and it is determined whether the two position sensors 210 on the same straight line are in the detection ON state (S408).

For example, when it is determined that the two position sensors 210 are in the detection ON state with respect to the magnetic pole 207 between the magnetic pole 207F and the magnetic pole 207G, it is determined that the holder 202 is near the intermediate position between the magnetic pole 207F and the magnetic pole 207G (that is, in a state like the holder 202d) (S409), and the magnetic pole 207F or the magnetic pole 207G is excited at d% to attract the holder 202 to a center of the magnetic pole 207F or the magnetic pole 207G (S410). When the holder 202 is disposed at the center of the magnetic pole 207F or the magnetic pole 207G, the reset operation ends (S421).

On the other hand, when it is determined in step S408 that the two position sensors 210 on the same straight line are not in the detection ON state, the processing proceeds to step S417.

In the embodiment, since the magnetic pole 207 around which the four position sensors 210 are disposed is set as a stop location for the holder 202, the magnetic pole 207F or the magnetic pole 207G is excited instead of the magnetic pole 207 disposed between the magnetic pole 207F and the magnetic pole 207G. When the magnetic pole 207 around which the two position sensors 210 are disposed is also set as the stop location for the holder 202, the magnetic pole 207 between the magnetic pole 207F and the magnetic pole 207G may be excited to end the reset operation.

On the other hand, when it is determined in step S404 that the four position sensors 210 are not in the detection ON state, the processing proceeds to step S411 to determine whether three position sensors 210 are in the detection ON state (S411).

For example, when it is determined that three position sensors 210 are in the detection ON state with respect to the magnetic pole 207A, the control computer 101 determines that the holder 202 is located near the intermediate position between the magnetic pole 207B and the magnetic pole 207A in a direction opposite to the position sensor 210 in a detection OFF state with the magnetic pole 207A being a center (that is, in a state like the holder 202b) (S412), and excites the magnetic pole 207A at b% to attract the holder 202 to a center of the magnetic pole 207A (S413). When the holder 202 is disposed at the center of the magnetic pole 207A, the reset operation ends (S421).

On the other hand, when it is determined in step S411 that three position sensors 210 are not in the detection ON state, it is determined whether two position sensors 210 on different straight lines are in the detection ON state (S414).

For example, when it is determined that two position sensors 210 on different straight lines are in the detection ON state with respect to the magnetic pole 207E, it is determined that the holder 202 is located near the intermediate position between the magnetic pole 207C and the magnetic pole 207D in a direction opposite to the position sensor 210 in the detection OFF state with the magnetic pole 207E being a center (that is, a state like the holder 202c) (S415), and the magnetic pole 207E is excited at c% to attract the holder 202 to a center of the magnetic pole 207E (S416). When the holder 202 is disposed at the center of the magnetic pole 207E, the reset operation ends (S421).

On the other hand, when it is determined that the two position sensors 210 on the different straight lines are not in the detection ON state in step S414, and when it is determined that the two position sensors 210 on the same straight line are not in the detection ON state in step S408, the processing proceeds to step S417, and it is determined whether one position sensor 210 is in the detection ON state (S417).

For example, when it is determined that one position sensor 210 is in the detection ON state with respect to a magnetic pole 207H, it is determined that the holder 202 is near an intermediate position between the magnetic pole 207H and the magnetic pole 207 of an adjacent transporting device 102 (that is, in a state like the holder 202e) (S418), and the magnetic pole 207H or the magnetic pole 207 of the adjacent transporting device 102 is excited at e% to attract the holder to a center of the magnetic pole 207H or the magnetic pole 207 of the adjacent transporting device 102 (S419). When the holder 202 is disposed at the center of the magnetic pole 207H or the magnetic pole 207 of the adjacent transporting device 102, the reset operation ends (S421).

On the other hand, when it is determined in step S417 that one position sensor 210 is not in the detection ON state, it is determined that there is no holder 202 near the magnetic pole 207 (S420), and the reset operation ends (S421).

Next, a transporting method for the holder 202 after the reset operation is completed will be described with reference to the flow chart of Fig. 5.

First, according to an instruction from the control computer 101, as shown in Fig. 5A, the transporting device 102 starts a transport operation to a position of a specified magnetic pole 207 (S501).

As shown in Fig. 5, when the target position is a magnetic pole C in Fig. 5, the transporting device 102 excites a magnetic pole B in Fig. 5 at a% (S502) and determines whether 2, 3, and 4 among the position sensors 210 in Fig. 5 are in the detection ON state and 1, 5, 6, 7, and 8 are in the detection OFF state (see Fig. 5B) (S503). When it is determined that 2, 3, and 4 among the position sensors 210 are in the detection ON state and 1, 5, 6, 7, and 8 are in the detection OFF state, the magnetic pole B is excited at b% (S504).

On the other hand, when it is determined in step S503 that the condition is not satisfied, the processing returns to step S502, and sensor information acquisition and the excitation of the magnetic pole B are continued until the condition is satisfied.

Thereafter, it is determined whether 3 and 5 among the position sensors 210 are in the detection ON state and 1, 2, 4, 6, 7, and 8 are in the detection OFF state (see Fig. 5C) (S505). When it is determined that 3 and 5 among the position sensors 210 are in the detection ON state and 1, 2, 4, 6, 7, and 8 are in the detection OFF state, the magnetic pole B is excited at c% and the magnetic pole C is excited at d% (S506).

On the other hand, when it is determined in step S505 that the condition is not satisfied, the processing returns to step S504, and the sensor information acquisition and the excitation of the magnetic pole B are continued until the condition is satisfied.

Thereafter, it is determined whether 5 among the position sensors 210 is in the detection ON state and 1, 2, 3, 4, 6, 7, and 8 are in the detection OFF state (see Fig. 5D) (S507). When it is determined that 5 among the position sensors 210 is in the detection ON state and 1, 2, 3, 4, 6, 7, and 8 are in the detection OFF state, the excitation of the magnetic pole B is turned OFF, and the magnetic pole C is excited at e% (S508).

On the other hand, when it is determined in step S507 that the condition is not satisfied, the processing returns to step S506, and the sensor information acquisition and the excitation of the magnetic poles B and C are continued until the condition is satisfied.

Thereafter, it is determined whether 5, 6, 7, and 8 among the position sensors 210 are in the detection ON state and 1, 2, 3, and 4 are in the detection OFF state (see Fig. 5E) (S509). When it is determined that 5, 6, 7, and 8 among the position sensors 210 are in the detection ON state and 1, 2, 3, and 4 are in the detection OFF state, the magnetic pole C is excited at f% (S510).

On the other hand, when it is determined in step S509 that the condition is not satisfied, the processing returns to step S508, and the sensor information acquisition and the excitation of the magnetic pole C are continued until the condition is satisfied.

Thereafter, it is determined again whether 5, 6, 7, and 8 among the position sensors 210 are in the detection ON state and 1, 2, 3, and 4 are in the detection OFF state (see Fig. 5F) (S511 NO S510). When it is determined again that 5, 6, 7, and 8 among the position sensors 210 are in the detection ON state and 1, 2, 3, and 4 are in the detection OFF state, the transport operation of the holder 202 ends (S512).

The holder transporting method described above is an example of a transporting method along a specific path (magnetic pole A→magnetic pole C) in the transporting device 102 as shown in Fig. 5, and can be flexibly changed depending on disposition positions of the transport path, the magnetic pole 207, and the position sensor 210, and a shape of the holder 202. Although it is assumed that the strengths a% to e% for exciting the magnetic pole 207 have different numerical values in order to stably attract the holder 202 to the center of the magnetic pole 207, not all of the values necessarily have different numerical values.

Next, effects of the embodiment will be described.

The transporting device 102 according to the first embodiment of the invention described above includes the plurality of position sensors 210 that detect the position of the holder 202 holding the sample container 201, and the calculating unit 209, the plurality of position sensors 210 are disposed such that the position sensors 210 detect the holder 202 at a predetermined position, and the calculating unit 209 determines the position of the holder 202 based on the detection result of the plurality of position sensors 210.

By detecting the holder 202 at the predetermined position by the plurality of position sensors 210 in this way, the position of the holder 202 can be detected much more stably as compared to the related art, thus loss of the holder 202 can be reduced as compared to the related art, countermeasures in response to collision between the holders 202 and the like can be reliably and quickly taken, and thus the sample can be transported more stably as compared to the related art.

The plurality of magnetic poles 207 that generate the thrust for transporting the holder 202 are further provided, the holder 202 includes a magnet or a magnetic body, the position sensor 210 is disposed between the magnetic poles 207 in a transport direction of the holder 202, and thus it is possible to implement high-speed transport, simultaneous mass transport, and multi-directional transport of the sample.

Further, since the position sensor 210 is an optical sensor, it is possible to detect presence or absence of the holder 202 immediately above the sensor with high accuracy.

Since the disposition interval between the plurality of position sensors 210 is shorter than the length of the holder 202 being transported, it is possible to more reliably prevent position loss of the holder 202.

### <Second Embodiment>

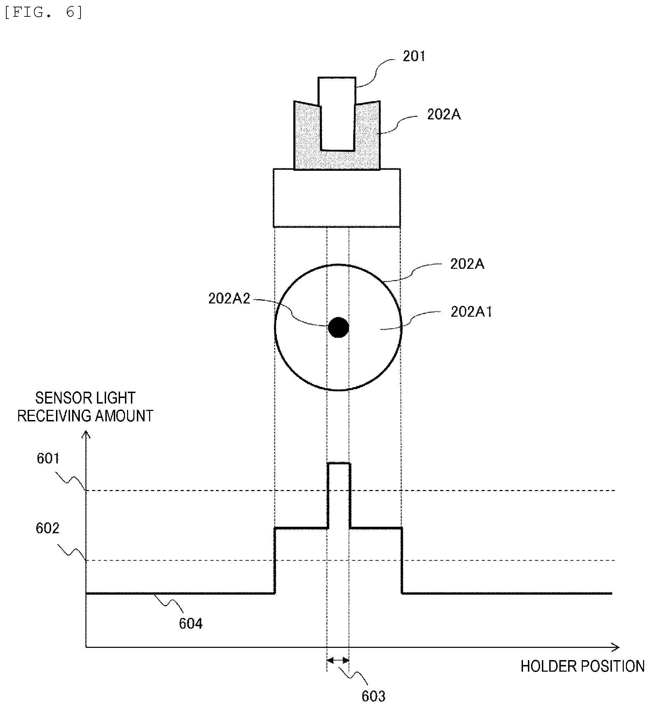

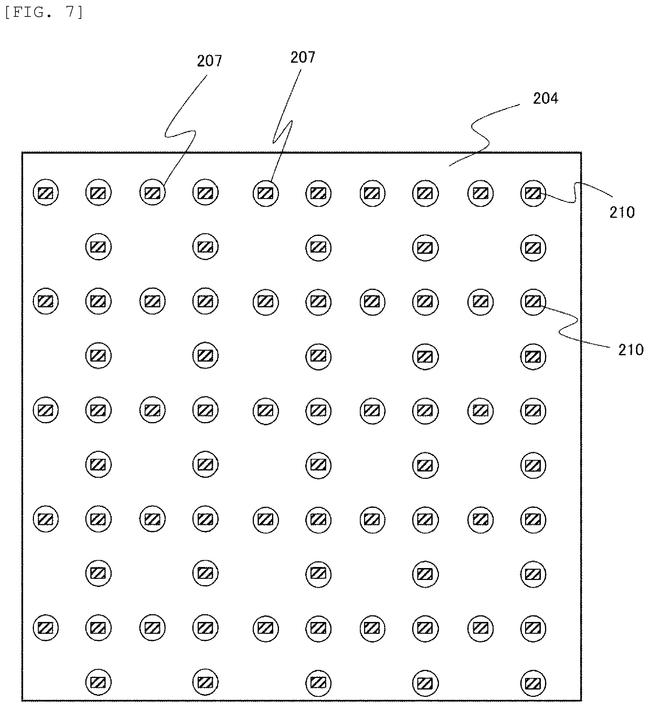

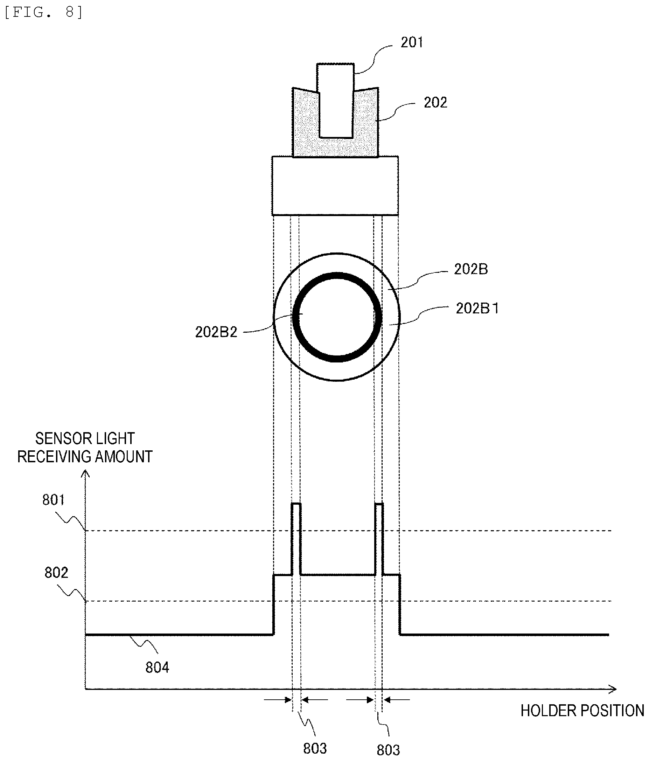

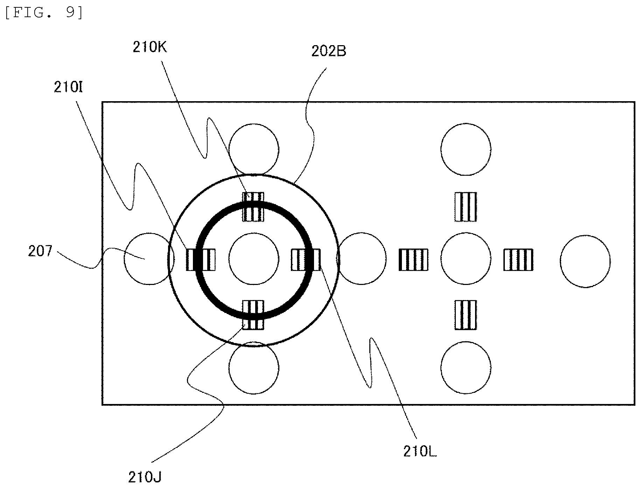

A sample transporting device and a sample transporting method according to a second embodiment of the invention will be described with reference to Figs. 6 to 9. Fig. 6 is a schematic view showing an outline of the transporting device and a change of a reflected light amount according to the second embodiment, Fig. 7 is a partial top plan view of the transporting device, Fig. 8 is a schematic view showing an outline of another form of the transporting device and the change of the reflected light amount according to the second embodiment, and Fig. 9 is a partial top plan view of the transporting device according to another form of the second embodiment corresponding to Fig. 2.

In the transporting device of the embodiment, bottom portions of holders 202A and 202B are formed of a plurality of materials having different reflectances to light emitted from an optical sensor.

Reflected light of light with which an object is irradiated changes depending on a distance to the irradiated object, a material, or a color of the object. Utilizing this property, when a reflective sensor including a light emitting portion and a light receiving portion is used as the position sensor 210, by changing a material or a color at a desired position on a bottom surface of the holder 202A (Fig. 6) or a bottom surface of the holder 202B (Fig. 8), it is possible to further improve detection efficiency and to also detect a desired position in the holder.

For example, as shown in Fig. 6, a low reflectance portion 202A1 and a high reflectance portion 202A2 are formed by changing a material or a color of a center portion of the bottom surface of the holder 202A such that a reflected light amount 604 from the center portion of the bottom surface of the holder 202A is higher than that of other portions.

In addition, the position sensor 210 can detect whether the center portion of the bottom surface of the holder 202A is located immediately above the position sensor 210 in addition to presence or absence of the holder 202A by setting a threshold for determining detection by the position sensor 210 in two stages, that is, a threshold 601 higher than the reflected light amount 604 from the high reflectance portion 202A2 and a threshold 602 lower than the reflected light amount 604 from the high reflectance portion 202A2 and higher than the reflected light amount 604 from the low reflectance portion 202A1. That is, when the position sensor 210 is disposed at the center of the magnetic pole 207 as shown in Fig. 7, it is possible to determine whether the center of the magnetic pole 207 and the center of the holder 202A are on a straight line.

As shown in Fig. 8, a low reflectance portion 202B1 and a high reflectance portion 202B2 are formed by changing a material or a color of an intermediate portion between a center portion and an outer edge portion of the bottom surface of the holder 202B such that a reflected light amount 804 near the intermediate portion between the center portion and the outer edge portion of the bottom surface of the holder 202B is higher than that of other portions.

Also in this case, similarly to the case in Fig. 6, the position sensor 210 can grasp a relative positional relationship between the holder 202B and the position sensor 210 in addition to presence or absence of the holder 202B by setting a threshold for determining detection by the position sensor 210 in two stages, that is, a threshold 801 higher than the reflected light amount 804 from the high reflectance portion 202B2 and a threshold 802 lower than the reflected light amount 804 from the high reflectance portion 202B2 and higher than the reflected light amount 804 from the low reflectance portion 202B1.

As shown in Figs. 3 and 9, when the position sensor 210 is provided at the center of the magnetic pole 207 in the longitudinal and lateral traveling directions of the holder, by changing the bottom surface of the holder 202 such that the high reflectance portion 202A2 is located on the position sensor 210 when the holder 202 is disposed at the center of the magnetic pole 207, it is possible to determine whether the holder 202 is located at the center of the magnetic pole 207 based on a plurality of pieces of position sensor information (in the case in Fig. 9, position sensors 210I to 210L are in the detection ON state).

An error in holder position detection at this time can be controlled by lengths 603 and 803 of the high reflectance portions 202A2 and 202B2, and detection can be performed with an error of 1 mm if a width is 1 mm and can be performed with an error of 5 mm if the width is 5 mm, for example.

This is merely an example, and if a location to be detected is an outer peripheral portion of the bottom surface of the holder 202, the outer peripheral portion can be detected by setting the threshold to 602. If there are a plurality of locations to be detected, a material of each location to be detected is changed, and a plurality of corresponding thresholds are set, whereby the plurality of locations can be detected.

Other configurations and operations are substantially the same as those of the sample transporting device and the sample transporting method of the first embodiment described above, and details thereof are omitted.

In the sample transporting device and the sample transporting method according to the second embodiment of the invention, substantially the same effects as those of the sample transporting device and the sample transporting method according to the first embodiment described above can also be obtained.

Since the bottom portion of the holder 202 is formed of the plurality of materials having different reflectances to the light emitted from the optical sensor, a relative positional relationship between the position sensor 210 and each of the holders 202A and 202B can also be grasped, and position detection accuracy can be further improved.

### <Third Embodiment>

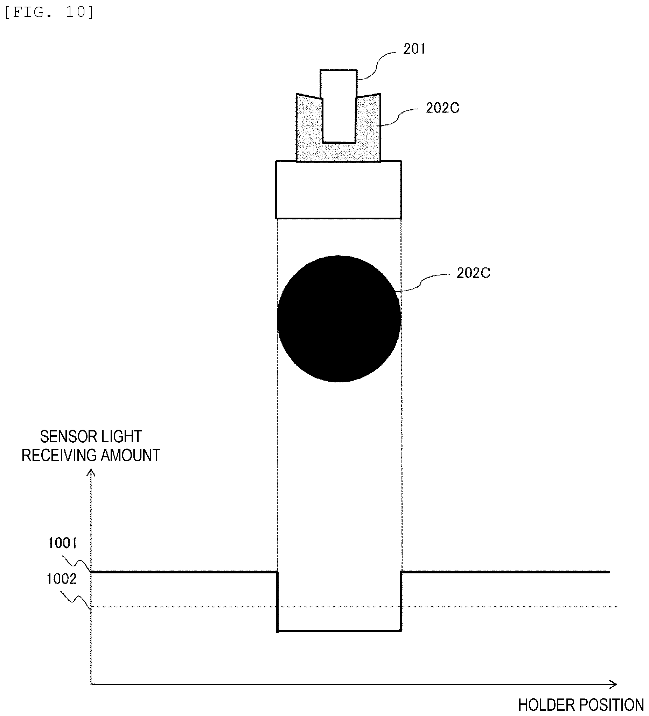

A sample transporting device and a sample transporting method according to a third embodiment of the invention will be described with reference to Fig. 10. Fig. 10 is a schematic view showing an outline of the transporting device and a change of a reflected light amount according to the third embodiment.

As shown in Fig. 10, also in the transporting device of the embodiment, similarly to the second embodiment, a bottom portion of a holder 202C is formed of a plurality of materials having different reflectances to light emitted from an optical sensor.

However, in the second embodiment, an example is described in which, when the holders 202A and 202B are located above the reflective position sensor 210, the detection ON state is entered when the reflected light amount increases and exceeds the set threshold to detect the holders 202A and 202B.

In contrast, in an environment with strong ambient light, by turning off the light emitting portion of the reflective position sensor 210, the ambient light is blocked when the holders 202A and 202B are located above the position sensor 210, and a light receiving amount 1001 of the light receiving portion decreases as shown in the graph in Fig. 10.

Therefore, the bottom portion of the holder 202C has a material or a color having a high absorbance. At this time, since the detection state of the position sensor 210 changes from ON to OFF by setting a threshold for determining that the position sensor 210 detects the holder 202C to a threshold 1002, the holder 202C can be detected. Using this method, the holder 202 can be detected even in the environment with strong ambient light.

The embodiment can be carried out by turning off the light emitting portion of the reflective position sensor 210 and appropriately setting the threshold for determining the detection by the position sensor 210, and the reset operation and the holder transport can be performed according to the flow chart described in the first embodiment.

Other configurations and operations are substantially the same as those of the sample transporting device and the sample transporting method of each of the first and second embodiments described above, and details thereof are omitted.

In the sample transporting device and the sample transporting method according to the third embodiment of the invention, substantially the same effects as those of the sample transporting device and the sample transporting method according to each of the first and second embodiments described above can also be obtained.

Although a case where an entire surface of the bottom portion of the holder 202C is formed of a material or a color having a high absorbance has been described, a part of the bottom portion of the holder 202C may have a material or a color having a lower absorbance than other parts according to the same technical idea as that of the second embodiment, and in this case, the same effects as those of the second embodiment can be obtained.

### <Fourth Embodiment>

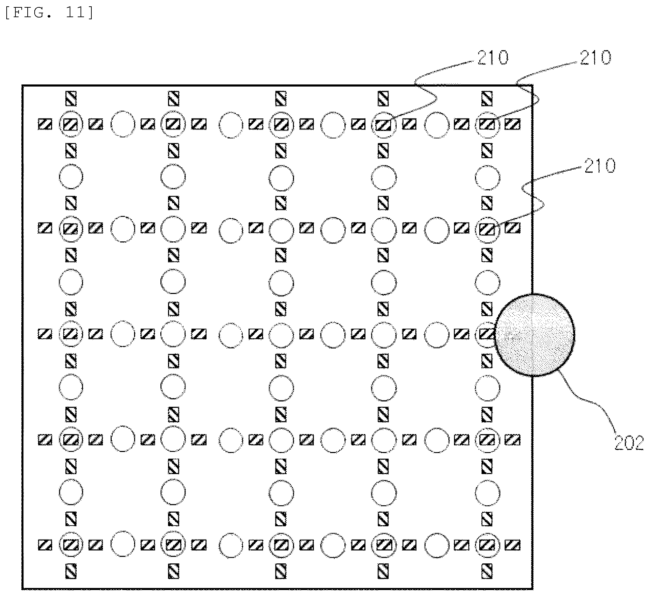

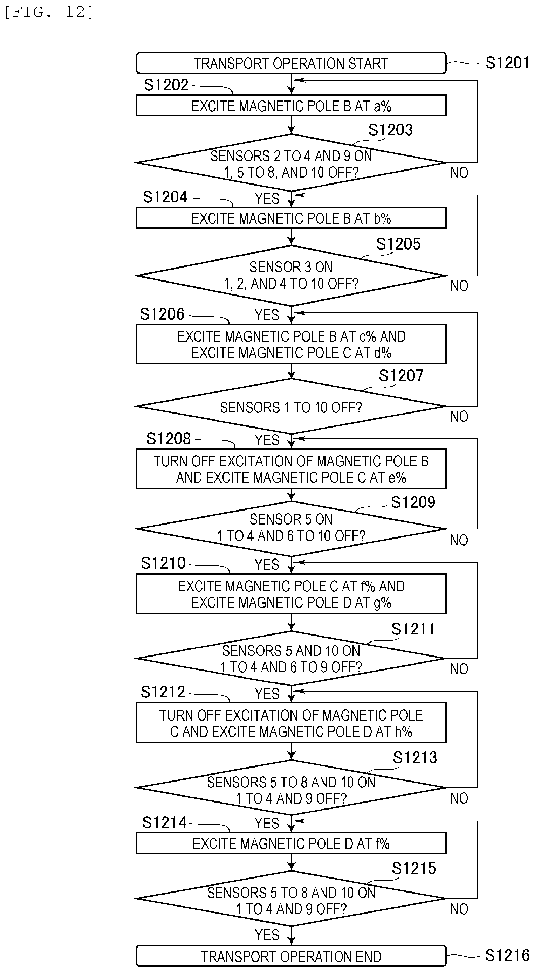

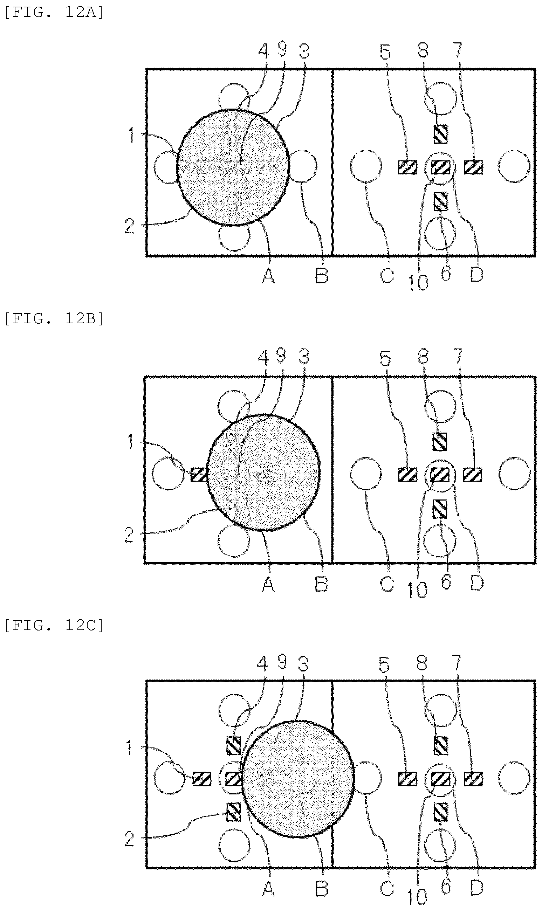

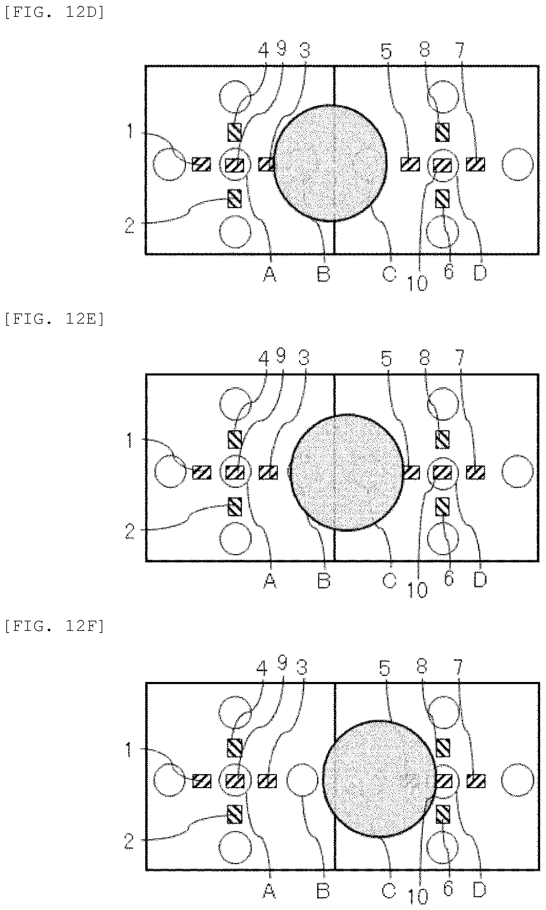

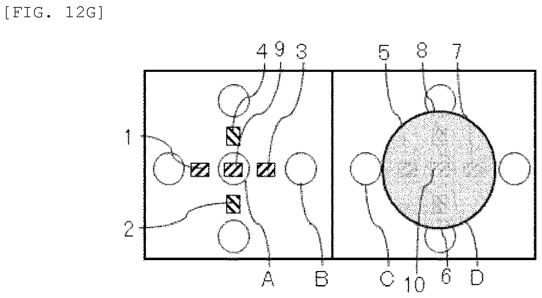

A sample transporting device and a sample transporting method according to a fourth embodiment of the invention will be described with reference to Figs. 11 to 12G. Fig. 11 is a partial top plan view of the transporting device according to the fourth embodiment, Fig. 12 is a flow chart showing a holder transporting method using a plurality of pieces of position sensor information in the embodiment, and Figs. 12A to 12G are views showing a state of the transporting device 102 in one process of the flow chart of Fig. 12.

In Fig. 11, as viewed with the magnetic pole 207 as a center, a part of the position sensors 210 are located vertically above the center position of the magnetic pole 207 in addition to those located at the intermediate position between the adjacent magnetic poles 207 in the longitudinal and lateral traveling directions of the holder 202. With such a disposition, the number of mounted position sensors 210 increases, the position of the holder 202 moving between the transporting devices is more accurately grasped, and stable holder transport is implemented. There are locations where two position sensors 210 are provided and locations where four position sensors 210 are provided around the magnetic pole 207, and alternatively, four position sensors 210 may be uniformly provided around all of the magnetic poles, or may be provided at any locations for purposes other than detecting the position of the holder 202.

A transporting method for the holder 202 after the reset operation is completed will be described with reference to the flow chart of Fig. 12.

As shown in Fig. 12, first, according to an instruction from the control computer 101, as shown in Fig. 12A, the transporting device 102 starts a transport operation to a position of a specified magnetic pole 207 (S1201).

Next, when the target position is a magnetic pole C in Fig. 12, the transporting device 102 excites a magnetic pole B in Fig. 12 at a% (S1202) and determines whether 2, 3, 4, and 9 among the position sensors 210 in Fig. 12 are in the detection ON state and 1, 5, 6, 7, 8, and 10 are in the detection OFF state (see Fig. 12B) (S1203). When it is determined that 2, 3, 4, and 9 among the position sensors 210 are in the detection ON state and 1, 5, 6, 7, 8, and 10 are in the detection OFF state, the magnetic pole B is excited at b% (S1204).

On the other hand, when it is determined in step S1203 that the condition is not satisfied, the processing returns to step S1202, and sensor information acquisition and the excitation of the magnetic pole B are continued until the condition is satisfied.

Thereafter, it is determined whether 3 among the position sensors 210 is in the detection ON state and 1, 2, 4, 5, 6, 7, 8, 9, and 10 are in the detection OFF state (see Fig. 12C) (S1205). When it is determined that 3 among the position sensors 210 is in the detection ON state and 1, 2, 4, 5, 6, 7, 8, 9, and 10 are in the detection OFF state, the magnetic pole B is excited at c% and the magnetic pole C is excited at d% (S1206).

On the other hand, when it is determined in step S1205 that the condition is not satisfied, the processing returns to step S1204, and the sensor information acquisition and the excitation of the magnetic pole B are continued until the condition is satisfied.

Thereafter, it is determined whether 1, 2, 3, 4, 5, 6, 7, 8, 9, and 10 among the position sensors 210 are in the detection OFF state (see Fig. 12D) (S1207). When it is determined that 1, 2, 3, 4, 5, 6, 7, 8, 9, and 10 among the position sensors 210 are in the detection OFF state, the excitation of the magnetic pole B is turned OFF, and the magnetic pole C is excited at e% (S1208).

On the other hand, when it is determined in step S1207 that the condition is not satisfied, the processing returns to step S1206, and the sensor information acquisition and the excitation of the magnetic poles B and C are continued until the condition is satisfied.

Thereafter, it is determined whether 5 among the position sensors 210 is in the detection ON state and 1, 2, 3, 4, 6, 7, 8, 9, and 10 are in the detection OFF state (see Fig. 12E) (S1209). When it is determined that 5 among the position sensors 210 is in the detection ON state and 1, 2, 3, 4, 6, 7, 8, 9, and 10 are in the detection OFF state, the magnetic pole C is excited at f%, and a magnetic pole D is excited at g% (S1210).

On the other hand, when it is determined in step S1209 that the condition is not satisfied, the processing returns to step S1208, and the sensor information acquisition and the excitation of the magnetic pole C are continued until the condition is satisfied.

Thereafter, it is determined whether 5 and 10 among the position sensors 210 are in the detection ON state and 1, 2, 3, 4, 6, 7, 8, and 9 are in the detection OFF state (see Fig. 12F) (S1211). When it is determined that 5 and 10 among the position sensors 210 are in the detection ON state and 1, 2, 3, 4, 6, 7, 8, and 9 are in the detection OFF state, the excitation of the magnetic pole C is turned OFF, and the magnetic pole D is excited at h% (S1212).

On the other hand, when it is determined in step S1211 that the condition is not satisfied, the processing returns to step S1210, and the sensor information acquisition and the excitation of the magnetic poles C and D are continued until the condition is satisfied.

Thereafter, it is determined whether 5, 6, 7, 8, and 10 among the position sensors 210 are in the detection ON state and 1, 2, 3, 4, and 9 are in the detection OFF state (see Fig. 12G) (S1213). When it is determined that 5, 6, 7, 8, and 10 among the position sensors 210 are in the detection ON state and 1, 2, 3, 4, and 9 are in the detection OFF state, the magnetic pole D is excited at i% (S1214).

On the other hand, when it is determined in step S1209 that the condition is not satisfied, the processing returns to step S1212, and the sensor information acquisition and the excitation of the magnetic pole D are continued until the condition is satisfied.

Thereafter, it is determined again whether 5, 6, 7, 8, and 10 among the position sensors 210 are in the detection ON state and 1, 2, 3, 4, and 9 are in the detection OFF state (see Fig. 12G) (S1215). When it is determined again that 5, 6, 7, 8, and 10 among the position sensors 210 are in the detection ON state and 1, 2, 3, 4, and 9 are in the detection OFF state, the transport operation of the holder 202 ends (S1216).

The holder transporting method described above is an example of a transporting method along a specific path (magnetic pole A→magnetic pole D) between the transporting devices 102 as shown in Fig. 12, and can be flexibly changed depending on disposition positions of the transport path, the magnetic pole 207, and the position sensor 210, and the shape of the holder 202. Although it is assumed that the strengths a% to e% for exciting the magnetic pole 207 have different numerical values in order to stably attract the holder 202 to the center of the magnetic pole 207, not all of the values necessarily have different numerical values.

In the sample transporting device and the sample transporting method according to the fourth embodiment of the invention, substantially the same effects as those of the sample transporting device and the sample transporting method according to each of the first to third embodiments described above can also be obtained.

By disposing the position sensor 210 also at the position vertically above the center position of the magnetic pole 207 as viewed with the magnetic pole 207 as a center such that a plurality of transporting devices are connected to allow the holder to be transported between the transporting devices, the position of the holder 202 between the adjacent transporting devices 102 can be grasped more accurately, and the holder 202 can be transported more stably.

### <Others>

The invention is not limited to the embodiments described above, and includes various modifications. The embodiments described above have been described in detail to facilitate understanding of the invention, and the invention is not necessarily limited to those including all the configurations described above.

A part of a configuration in one embodiment can be replaced with a configuration in another embodiment, and a configuration in one embodiment can also be added to a configuration in another embodiment. Another configuration may be added to a part of a configuration in each embodiment, and a part of a configuration in each embodiment may also be deleted or replaced with another configuration.

For example, in each of the embodiments described above, a system in which the holder 202 is transported on a two-dimensional plane by an electromagnetic actuator is described as the transporting device, but the invention is not limited thereto. The transporting device 102 may be a one-dimensional transporting device that transports the sample only in a front-rear direction along a rail or the like laid in advance. The holder 202 may be moved not only by the electromagnetic actuator but also by a belt line driven by a motor.

### Reference Signs List

100: sample analysis system
101: control computer
102: transporting device (sample transporting device)
103: analyzer
201: sample container
202, 202A, 202B, 202C, 202a, 202b, 202c, 202d, 202e: holder (sample holder)
202A1, 202B1: low reflectance portion
202A2, 202B2: high reflectance portion
203: magnetic body
204: transporting surface
205: core
206: winding
207, 207A, 207B, 207C, 207D, 207E, 207F, 207G, 207H: magnetic pole (coil)
208: driving unit
209: calculating unit (control unit)
210, 2101, 210J, 210K, 210L: position sensor
601, 602, 801, 802, 1002: threshold
603, 803: length of high reflectance portion
604, 804: reflected light amount
1001: light receiving amount

## Claims

1. A sample transporting device comprising:
a plurality of sensors that detect a position of a sample holder holding a sample container; and
a control unit,
wherein each of the plural sensors is arranged to detect the sample holder at a predetermined position, and
the control unit determines the position of the sample holder based on the detection results of the plural sensors.

2. The sample transporting device according to claim 1, further comprising
a plurality of coils that generate thrust for transporting the sample holder,
wherein the sample holder has a magnet or a magnetic body, and
the sensor is arranged between the coils in a transporting direction of the sample holder.

3. The sample transporting device according to claim 1,
wherein the sensor is an optical sensor.

4. The sample transporting device according to claim 3,
wherein a bottom portion of the sample holder is formed by a plurality of materials having different reflectances of lights issued from the optical sensor.

5. The sample transporting device according to claim 1,
wherein arrangement intervals of the plural sensors are shorter than a length of the transporting sample holder.

6. The sample transporting device according to claim 2, wherein
the sensors are also disposed vertically above the coils.

7. A sample transporting method of transporting a sample contained in a sample container held in a sample holder, the method comprising:
arranging each of a plurality of sensors that detect a position of a sample holder holding a sample container so as to detect the sample holder at a predetermined position by the plurality of the sensors and transporting the sample holder, and
determining the position of the sample holder based on detection results of the plural sensors.
